# EUROPEAN PATENT APPLICATION

(11) **EP 4 621 538 A1**
(43) Date of publication of application: **24.09.2025**
(21) Application number: 23907668.0
(22) Date of filing: 18.12.2023
(51) Int. Cl.: G06F 3/04842, G06F 3/0481, G06F 3/01, G06F 3/00, G06F 1/16, H04W 4/80

(54) **WEARABLE DEVICE AND METHOD FOR DISPLAYING MULTIMEDIA CONTENT PROVIDED BY EXTERNAL ELECTRONIC DEVICE**

(30) Priority: 20.12.2022 KR 20220179815; 03.01.2023 KR 20230000812
(71) Applicant: Samsung Electronics Co., Ltd., Suwon-si, Gyeonggi-do 16677 (KR)
(72) Inventor: NAM, Myoungwoo, Suwon-si, Gyeonggi-do 16677 (KR); SON, Dongil, Suwon-si, Gyeonggi-do 16677 (KR); LEE, Bona, Suwon-si, Gyeonggi-do 16677 (KR)
(74) Representative: Gulde & Partner
(86) International application number: PCT/KR2023/020920
(87) International publication number: WO 2024/136383

(57) **Abstract**

A processor of a wearable device according to an embodiment may identify an external electronic device on the basis of a first object in an image obtained using a camera. The processor may request information for displaying multimedia content being provided via the external electronic device, from the external electronic device via a communication circuit on the basis of the identification. The processor may display a second object for notifying that the external electronic device is selectable, in association with the first object in response to reception of, via the communication circuit, the information transmitted from the external electronic device. The processor may display the multimedia content obtained from the external electronic device via a display according to the information on the basis of whether a user input for the first object is detected.

## Description

### [Technical Field]

The present disclosure relates to a wearable device for displaying multimedia content provided by an external electronic device and a method thereof.

### [Background Art]

In order to provide enhanced user experience, an electronic device that provides an augmented reality (AR) service that displays information generated by a computer in conjunction with an external object in the real-world is being developed. The electronic device may be a wearable device that may be worn by a user. For example, the electronic device may be AR glasses and/or a head-mounted device (HMD).

### [Disclosure]

### [Technical Solution]

A wearable device according to an embodiment may comprise communication circuitry, a display, a camera, memory storing instructions, and a processor. The instructions, when executed by the processor, may cause the wearable device to identify an external electronic device based on a first object within an image obtained using the camera. The instructions, when executed by the processor, may cause the wearable device to request, based on the identification, information to display multimedia content provided through the external electronic device, to the external electronic device through the communication circuitry. The instructions, when executed by the processor, may cause the wearable device to display, in conjunction with the first object, a second object to notify that the external electronic device is selectable, in response to receiving the information transmitted from the external electronic device through the communication circuitry. The instructions, when executed by the processor, may cause the wearable device to display, through the display, the multimedia content obtained from the external electronic device based on the information, based on weather a user input with respect to the first object is detected.

A method of a wearable device according to an embodiment may comprise identifying an external electronic device based on a first object within an image obtained using a camera. The method may comprise requesting information to display multimedia content provided through the external electronic device, to the external electronic device through communication circuitry, based on the identification. The method may comprise displaying, in conjunction with the first object, a second object to notify that the external electronic device is selectable, in response to receiving the information transmitted from the external electronic device through the communication circuitry. The method may comprise displaying, through the display, the multimedia content obtained from the external electronic device based on the information, based on weather a user input with respect to the first object is detected.

A computer-readable storage medium storing one or more programs according to an embodiment, the one or more programs, when executed by a processor of a wearable device, may cause the processor of the wearable device to identify an external electronic device based on a first object within an image obtained using a camera. The one or more programs, when executed by the processor of the wearable device, may cause the processor of the wearable device to request information to display multimedia content provided through the external electronic device, to the external electronic device through communication circuitry, based on the identification. The one or more programs, when executed by the processor of the wearable device, may cause the processor of the wearable device to display, in conjunction with the first object, a second object to notify that the external electronic device is selectable, in response to receiving the information transmitted from the external electronic device through the communication circuitry. The one or more programs, when executed by the processor of the wearable device, may cause the processor of the wearable device to display, through the display, the multimedia content obtained from the external electronic device based on the information, based on weather a user input with respect to the first object is detected.

### [Description of the Drawings]

FIG. 1 illustrates an example of a state of use of a wearable device according to an embodiment.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIG. 5 illustrates an example of a screen displayed through a display of a wearable device according to an embodiment.
FIG. 6 illustrates an example of a screen displayed through a display of a wearable device according to an embodiment.
FIG. 7 illustrates an example of a screen displayed through a display of a wearable device according to an embodiment.
FIG. 8 illustrates an example of a state of use of a wearable device according to an embodiment.
FIG. 9 illustrates an example of a screen displayed through a display of a wearable device according to an embodiment.
FIG. 10 illustrates an example of a screen displayed through a display of a wearable device according to an embodiment.
FIG. 11 illustrates an example of a flowchart regarding an operation of a wearable device according to an embodiment.
FIG. 12 illustrates an example of a signal flowchart regarding an operation of a wearable device according to an embodiment.
FIG. 13 is an exemplary diagram for a network environment in which a metaverse service is provided through a server.

### [Mode for Invention]

Hereinafter, various embodiments of the present document will be described with reference to the accompanying drawings.

It should be appreciated that various embodiments of the present disclosure and the terms used therein are not intended to limit the technology set forth herein to particular embodiments and include various changes, equivalents, or replacements for a corresponding embodiment. With regard to the description of the drawings, similar reference numerals may be used to refer to similar elements. It is to be understood that a singular form of a noun corresponding to an item may include one or more of the things, unless the relevant context clearly indicates otherwise. As used herein, phrases as "A or B," "at least one of A and/or B," "A, B, or C," or "at least one of A, B, and/or C," may include all possible combinations of the items enumerated together. Terms as "1st" and "2nd," or "first" and "second" may modify the corresponding components regardless of order or importance, and are only used to simply distinguish one component from another, and does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module", used in the present disclosure, may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be configured as an application-specific integrated circuit (ASIC).

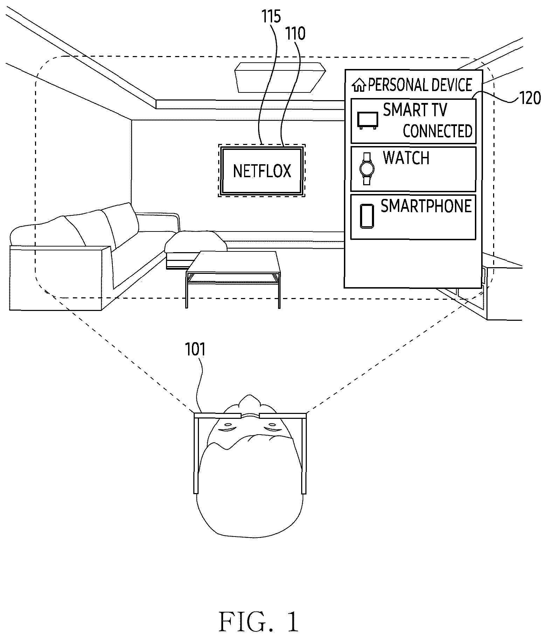

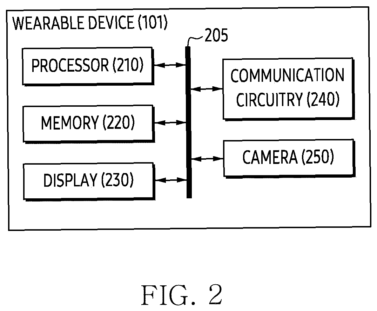

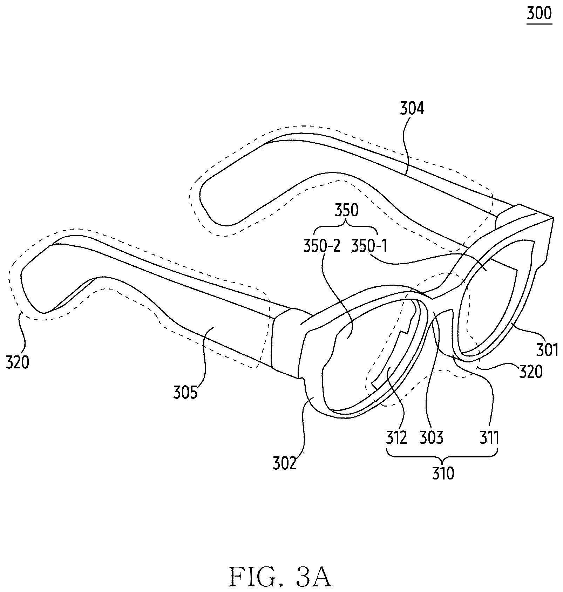

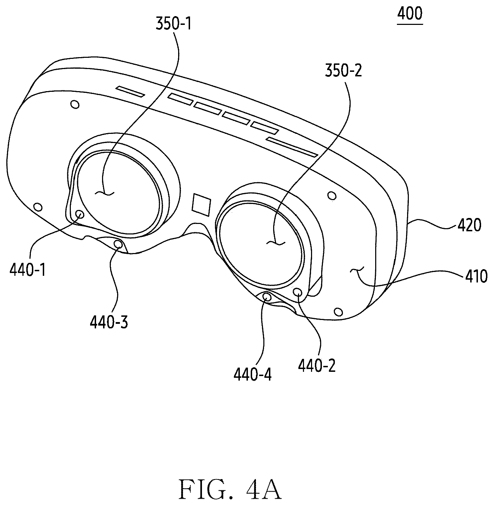

FIG. 1 illustrates an example of a state of use of a wearable device according to an embodiment. Referring to FIG. 1, a wearable device 101 according to an embodiment may include a head-mounted display (HMD) that is wearable on a user's head. Although an external appearance of the wearable device 101 having a form of glasses is illustrated, the embodiment is not limited thereto. An example of a structure of the wearable device 101 that is wearable on the user's head is described with reference to FIGS. 3A to 3B and/or FIGS. 4A to 4B. One or more hardware included in the wearable device 101 is exemplarily described with reference to FIG. 2. A first object 110 (e.g., an external electronic device) of FIG. 1 may include a terminal that is owned by the user. For example, the first object 110 may include a smart accessory such as a smartphone, a smartpad, a tablet person computer (PC), and a smartwatch. For example, the external electronic device may include a controller connected to the wearable device 101 through communication circuitry.

The wearable device 101 according to an embodiment may execute a function associated with augmented reality (AR) and/or mixed reality (MR). Referring to FIG. 1, in a state in which the user wears the wearable device 101, the wearable device 101 may include at least one lens disposed adjacent to the user's eye. The wearable device 101 may combine ambient light passing through the lens with light radiated from a display of the wearable device 101. A display area of the display may be formed within a lens through which ambient light passes. Since the wearable device 101 combines the ambient light and the light radiated from the display, the user may see an image in which a real object recognized by the ambient light and a virtual object formed by the light radiated from the display are mixed.

The wearable device 101 according to an embodiment may execute a function related to video see-through (VST) and/or virtual reality (VR). Referring to FIG. 1, within a state where the user wears the wearable device 101, the wearable device 101 may include a housing that covers the user's eye. The wearable device 101 may include a display disposed on a first surface facing the eye within the state. The wearable device 101 may include a camera disposed on a second surface opposite to the first surface. Using the camera, the wearable device 101 may obtain frames including ambient light. The wearable device 101 may make the user recognize the ambient light through the display by outputting the frames in the display disposed on the first surface. A display area of the display disposed on the first surface may be formed by one or more pixels included in the display. The wearable device 101 may make the user recognize the virtual object together with the real object recognized by the ambient light by synthesizing the virtual object in the frames outputted through the display.

Referring to FIG. 1, the wearable device 101 according to an embodiment may obtain an image using a camera. The wearable device 101 may display a screen 100 expressing(or representing) the image. The wearable device 101 may identify the first object 110 within an image obtained using the camera. The wearable device 101 may identify an external object corresponding to the first object 110 based on the identification of the first object. For example, the external object may be an external electronic device.

The wearable device 101 according to an embodiment may request information to display multimedia content provided through the external electronic device, to the external electronic device through the communication circuitry, based on the identification of the first object 110. For example, the wearable device 101 may request information to display the multimedia content to a first external electronic device through a second external electronic device (e.g., a server) different from the external electronic device, which is the first external electronic device. For example, the first external electronic device may be a device including a display, such as a TV or a computer monitor. For example, the first external electronic device may be a device including a display, such as a smartphone, a smartpad, or a tablet PC. For example, the first external electronic device may be a device capable of providing multimedia content through the display. However, it is not limited thereto. The wearable device 101 according to an embodiment may identify first user information logged in to the first external electronic device corresponding to the first object 110 and second user information logged in to the wearable device 101. For example, the wearable device 101 may identify the sameness of the first user information and the second user information. For example, the wearable device 101 may request information to display multimedia content provided by the external electronic device based on the sameness of the first user information and the second user information. For example, the wearable device 101 may request the information based on the fact that the first user information and the second user information are at least partially identical.

The wearable device 101 according to an embodiment may receive the information transmitted from the first external electronic device based at least in portion on a request for information to display multimedia content. For example, the wearable device 101 may receive the information through the communication circuitry. For example, the wearable device 101 may receive information transmitted from the first external electronic device through the second external electronic device. In response to receiving the information, the wearable device 101 may display a second object 115 to notify that the external electronic device is selectable. For example, the wearable device 101 may display the second object 115 in conjunction with the first object 110. For example, the wearable device 101 may notify that the first object 110 is selectable through the first object 110 or a third object 120 different from the first object 110. For example, the third object 120 may be displayed in an area different from the first object 110 and the second object 120. For example, the second object 115 may be displayed along an edge of the first object 110. For example, although the second object 115 is displayed as a border of the first object 110 in FIG. 1, the second object 115 may be an object superimposed on the first object 110. The wearable device 101 may be displayed by blinking the second object 115 superimposed on the first object 110. For example, the wearable device 101 may display the second object 115 along the edge of the first object 110. For example, the wearable device 101 may superimpose the second object 115 on the first object 110 and display it by blinking. The wearable device 101 may highlight that the first object 110 is selectable through the third object 120. For example, the third object 120 may be displayed on an area different from the first object 110. For example, the first object 110 may be visually highlighted with respect to at least one third object within the image. For example, the wearable device 101 may highlight the third object 120 in a state in which information to display multimedia content provided from an external electronic device may be requested. For example, in the state, the wearable device 101 may represent that an external electronic device may be selected by blinking the third object 120 or changing the third object 120 to a different color.

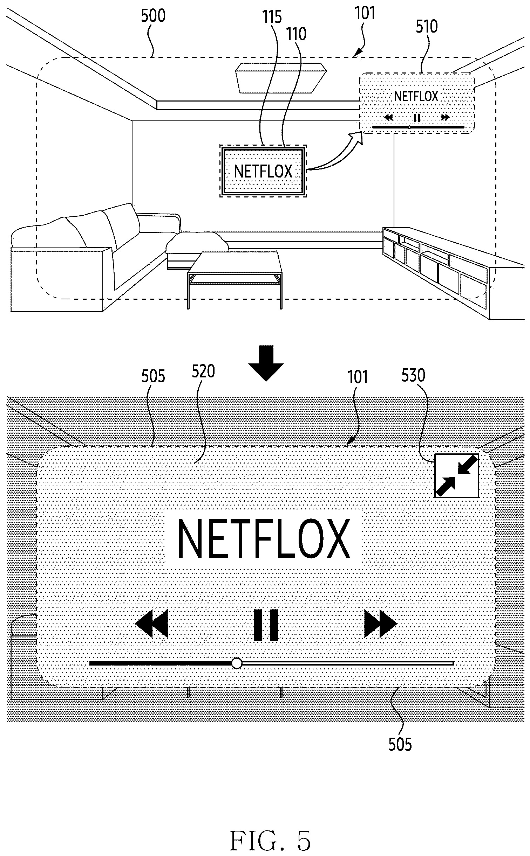

The wearable device 101 according to an embodiment may receive an input with respect to the first object 110. The wearable device 101 may identify an input with respect to the third object 120. The wearable device 101 may display multimedia content through a display based on information to display the multimedia content in response to the input with respect to the first object 110 and/or the third object 120. For example, the wearable device 101 may provide multimedia content through the display following multimedia content provided through an external electronic device. The operation of displaying multimedia content through the display is described later in FIG. 5.

As described above, the wearable device 101 according to an embodiment may identify the first object 110 within the image obtained using the camera. The wearable device 101 may identify the external electronic device corresponding to the first object 110 based on the first object 110. Based on the identification, the wearable device 101 may request information to display multimedia content provided through the first external electronic device to the first external electronic device through the communication circuitry. The wearable device 101 may display the second object 115 and/or the third object 120 to notify that the first external electronic device is selectable in response to receiving the information transmitted from the first external electronic device through the communication circuitry based at least in portion on the request. The wearable device 101 may display the multimedia content through the display based on the information in response to the input received with respect to the first object 110 and/or the third object 120. For example, the wearable device 101 may display the multimedia content based on an entire area of the display and/or an area exceeding a specified ratio of the entire area. The wearable device 101 may enhance user experience of the wearable device 101 by displaying the multimedia content based on receiving information associated with the multimedia content provided from the first external electronic device.

FIG. 2 illustrates an example of a block diagram of a wearable device according to an embodiment. A wearable device 101 of FIG. 2 may include a wearable device 101 of FIG. 1.

Referring to FIG. 2, the wearable device 101 according to an embodiment may include at least one of a processor 210, a memory 220, a display 230, communication circuitry 240, or a camera 250. The processor 210, the memory 220, the display 230, the communication circuitry 240, and the camera 250 may be electronically and/or operably coupled with each other by an electronical component such as a communication bus 205. Hereinafter, hardware being operably coupled may mean that a direct or indirect connection between the hardware is established in wired or wirelessly, in order to control second hardware by first hardware among the hardware. Although illustrated in different blocks, the embodiment is not limited thereto. A portion of the hardware of FIG. 2 (e.g., at least a portion of the processor 210, the memory 220, and the communication circuitry 240) may be included in a single integrated circuit such as a system on a chip (SoC). The type and/or number of hardware included in the wearable device 101 is not limited to that illustrated in FIG. 2. For example, the wearable device 101 may include only a portion of the hardware illustrated in FIG. 2.

The wearable device 101 according to an embodiment may include hardware to process data based on one or more instructions. For example, the hardware to process data may include the processor 210. For example, the hardware to process data may include an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, a hexa core, or an octa core. The operations of FIG. 1 and/or the operations described later may be performed by the processor 210.

The memory 220 of the wearable device 101 according to an embodiment may include a component to store data and/or instruction inputted to the processor 210 and/or outputted from the processor 210 of the wearable device 101. For example, the memory 220 may include volatile memory such as random-access memory (RAM) and/or non-volatile memory such as read-only memory (ROM). For example, the volatile memory may include at least one of dynamic RAM (DRAM), static RAM (SRAM), Cache RAM, and pseudo SRAM (PSRAM). For example, the nonvolatile memory may include at least one of programmable ROM (PROM), erasable PROM (EPROM), electrically erasable PROM (EEPROM), flash memory, hard disk, compact disc, solid state drive (SSD), and embedded multi-media card (eMMC).

The display 230 of the wearable device 101 according to an embodiment may output visualized information to a user. For example, the display 230 may output visualized information to the user by being controlled by the processor 210 including a circuit such as a graphic processing unit (GPU). The display 230 may include a flat panel display (FPD) and/or electronic paper. The FPD may include a liquid crystal display (LCD), a plasma display panel (PDP), and/or one or more light emitting diodes (LEDs). The LED may include an organic LED (OLED). The wearable device 101 according to an embodiment may provide virtual reality and/or actual reality through the display 230. The virtual reality may include synthesizing a virtual object on an image obtained through the camera 250. For example, the virtual reality may include mixed reality. For example, the wearable device 101 may display the image obtained through the camera 250 through the display 230. For example, the operation of displaying the image obtained through the camera 250 may be referred to as a video see-through (VST) mode.

The communication circuitry 240 of the wearable device 101 according to an embodiment may include a hardware component to support transmission and/or reception of an electrical signal between the wearable device 101 and an external electronic device 103. For example, the communication circuitry 240 may include at least one of a MODEM, an antenna, and an optic/electronic (O/E) converter. The communication circuitry 240 may support the transmission and/or reception of the electrical signal based on various types of protocols such as ethernet, local area network (LAN), wide area network (WAN), wireless fidelity (WiFi), BLUETOOTH^{®}, Bluetooth low energy (BLE), ZigBee, long term evolution (LTE), and fifth generation new radio (5G NR). The wearable device 101 may establish a communication link with an external electronic device through the communication circuitry 240. For example, the wearable device 101 may transmit and/or receive an electrical signal to request information through the communication circuitry 240. For example, the wearable device 101 may request information to display multimedia content provided through the external electronic device to the external electronic device through the communication circuitry 240. The wearable device 101 may transmit second user information logged in to the wearable device 101 to the external electronic device in order to request first user information logged in to the external electronic device. The wearable device 101 may encrypt the second user information and transmit the encrypted second user information to the external electronic device. The external electronic device may identify the sameness of the first user information and the second user information based on receiving the second user information. For example, the wearable device 101 may identify the sameness of the first user information and the second user information by decrypting the second user information. The external electronic device and the wearable device 101 may establish a communication link based on the identification of the sameness of the first user information and the second user information. The external electronic device may transmit information associated with multimedia content provided from the external electronic device transmitted from the wearable device 101 to the wearable device 101 based on the identification of the sameness. The wearable device 101 may display the multimedia content through the display 230 based on receiving information associated with the multimedia content. For example, information associated with the multimedia content may include information associated with the provision of the multimedia content, such as a name of the multimedia content and/or the playback time of the multimedia content.

The camera 250 of the wearable device 101 according to an embodiment may include a lens assembly or an image sensor. The lens assembly may collect light emitted from a subject which is a target of image capture. The lens assembly may include one or more lenses. The camera 250 according to an embodiment may include a plurality of lens assemblies. For example, in the camera 350, a portion of the plurality of lens assemblies may have the same lens property (e.g., angle of view, focal length, autofocus, f number, or optical zoom), or at least one lens assembly may have one or more lens properties that are different from the lens properties of the other lens assemblies. The lens assembly may include a wide-angle lens or a telephoto lens. An image sensor according to an embodiment may include, for example, one image sensor selected from among image sensors with different properties, such as an RGB sensor, a black and white (BW) sensor, an IR sensor, or a UV sensor, a plurality of image sensors with the same property, or a plurality of image sensors with a different property. Each image sensor included in the image sensor may be implemented using, for example, a charged coupled device (CCD) sensor or a complementary metal oxide semiconductor (CMOS) sensor. The wearable device 101 according to an embodiment may obtain an image through the camera 250. The wearable device 101 may perform the operation of displaying the image obtained through the camera 250. For example, the operation of the wearable device 101 displaying the image obtained through the camera 250 within a VR environment may be referred to as a VST mode. The wearable device 101 may display a visual object on at least a portion of the image while operating in the VST mode. For example, the visual object may be a virtual object generated by the processor 210 of the wearable device 101. For example, the wearable device 101 may display the visual object and/or virtual object by superimposing the image. The wearable device 101 may identify a real object identified within the image. The wearable device 101 may display a visual object to notify that the real object is selectable by superimposing the real object. The wearable device 101 according to an embodiment may provide actual reality through the display 230. For example, within an AR environment, the wearable device 101 may provide the actual reality, which is seen by penetrating the display 230. The wearable device 101 may display the virtual object in the display 230 within the AR environment.

The wearable device 101 according to an embodiment may display a second object (e.g., the second object 115 of FIG. 1) to notify that an external electronic device is selectable in conjunction with a first object (e.g., the first object 110 of FIG. 1) corresponding to the external electronic device. The wearable device 101 may receive an input with respect to the first object based on the display of the second object. For example, the wearable device 101 may receive the input with respect to the first object using a controller in which a communication link with the wearable device 101 is established . For example, the wearable device 101 may receive the input with respect to the first object based on tracking the user's gaze. The wearable device 101 may display multimedia content provided by the external electronic device from the external electronic device through the display 230 in response to receiving the input. The input with respect to the first object is not limited to what is described above.

As described above, the wearable device 101 according to an embodiment may obtain an image through the camera 250. The wearable device 101 may identify the external electronic device corresponding to the first object based on the first object included within the image. Based on the identification, the wearable device 101 may request information to display multimedia content provided through the external electronic device to the external electronic device through the communication circuitry 240. The wearable device 101 may receive the information transmitted from the external electronic device based at least in part on the request. In response to receiving the information, the wearable device 101 may display the second object to notify that the external electronic device is selectable in conjunction with the first object. The wearable device 101 may display the multimedia content based on the information in response to the input received with respect to the first object in conjunction with the second object. For example, the wearable device 101 may display multimedia content provided by the external electronic device corresponding to the first object in association with the external electronic device. The wearable device 101 may provide the multimedia content from a time when the multimedia content is being reproduced in the external electronic device. The wearable device 101 may enhance user experience of the wearable device 101 by continuously providing multimedia content provided by the external electronic device.

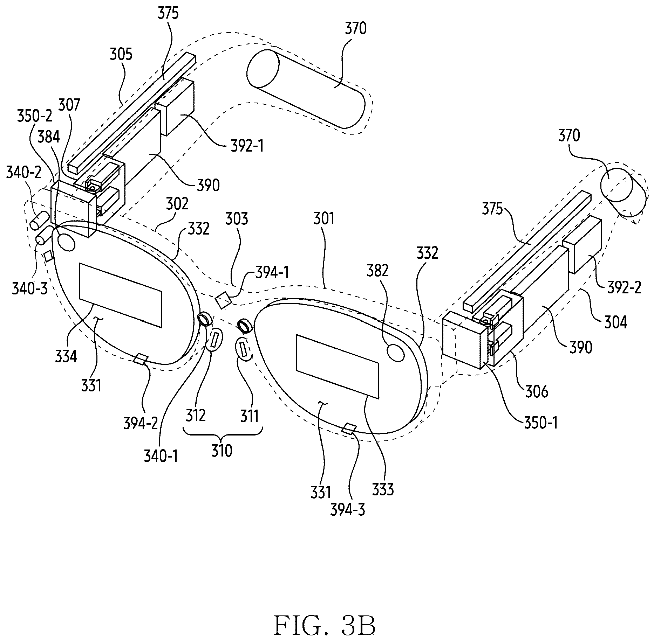

FIG. 3A illustrates an example of a perspective view of a wearable device according to an embodiment. FIG. 3B illustrates an example of one or more hardware disposed in the wearable device according to an embodiment. A wearable device 300 of FIGS. 3A to 3B may include a wearable device 101 of FIGS. 1 and/or 2. As shown in FIG. 3A, the wearable device 300 according to an embodiment may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 230 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. For another example, the at least one display 350 may display a virtual reality image to be coupled with a reality screen transmitted through ambient light. The virtual reality image outputted from the at least one display 350 may be transmitted to eyes of the user, through one or more hardware (e.g., optical devices 382 and 384 and/or at least one waveguide 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident at an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)) and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

Referring to FIG. 3A, according to an embodiment, the frame may include an area 320 at least partially in contact with the portion of the user's body in a case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305 that is contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object using a touch sensor, a grip sensor, and/or a proximity sensor formed on at least a portion of the surface of the frame.

According to an embodiment, the wearable device 300 may include hardware (e.g., hardware described above based on the block diagram of FIG. 2) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphones 394 included in the wearable device 300 is two or more, the wearable device 300 may identify a direction of the sound signal using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 225 of FIG. 2. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 360-1 may be disposed alone toward the user's left eye or may be disposed toward both eyes.

In an embodiment, the photographing camera 340-3 may photograph a real image or background to be matched with a virtual image in order to implement augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks forward, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided by the at least one display 350 by recognizing the movement of the whole or portion of the user's body, such as the user's torso, hand, or face. The motion recognition camera 340-2 may obtain a signal corresponding to motion by recognizing a user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

In an embodiment, the camera(s) 340 included in the wearable device 300 are not limited to the above-described eye tracking camera 340-1 and the motion recognition camera 340-2. For example, the wearable device 300 may identify an external object included in the FoV using the photographing camera 340-3 disposed toward the user's FoV. The wearable device 300 identifying an external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, the wearable device 300 may include a camera 340 (e.g., a face tracking (FT) camera) disposed toward a face to obtain an image including the face of the user wearing the wearable device 300.

Although not illustrated, the wearable device 300 according to an embodiment may further include a light source (e.g., LED) that emits light toward a subject (e.g., user's eyes, face, and/or an external object in the FoV) photographed using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit a signal or power to the outside of the wearable device 300 or may receive signal or power from the outside. The antenna module 375 may be electrically and/or operably connected with a communication circuit (e.g., the communication circuit 235 of FIG. 2) in the wearable device 300. In an embodiment, the antenna module 375 may be disposed in the first temple 304 and/or the second temple 305. For example, the antenna module 375 may be disposed close to one surface of the first temple 304 and/or the second temple 305.

In an embodiment, speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

In an embodiment, a light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit red light at a constant cycle. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by the blocks described above with reference to FIG. 2) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of a user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

As described above, the wearable device 300 according to an embodiment may identify a first object (e.g., the first object 110 of FIG. 1) displayed through the display 350. The wearable device 300 may identify an external electronic device corresponding to the first object. The wearable device 300 may request information related to multimedia content provided through the external electronic device, based on the identification of the external electronic device. In response to a reception of the information, the wearable device 300 may display a second object for notifying that the external electronic device is selectable in association with the first object. The wearable device 300 may receive an input for the first object associated with the second object. For example, wearable device 300 may identify the input using the camera 340. For example, the wearable device 300 may identify the input based on a user's gaze tracked by using the camera 340. For example, the wearable device 300 may identify the input, based on a user's gesture identified using the camera 340. For example, the user's gesture may include a gesture indicating the external electronic device or the first object corresponding to the external electronic device. For example, the user's gesture may include an air-gesture for indicating the first object. The wearable device 300 may display multimedia content through the display 350 based on information related to the multimedia content transmitted from the external electronic device, in response to an input to the first object. For example, the wearable device 300 may display the multimedia content being provided at a time when the input is identified.

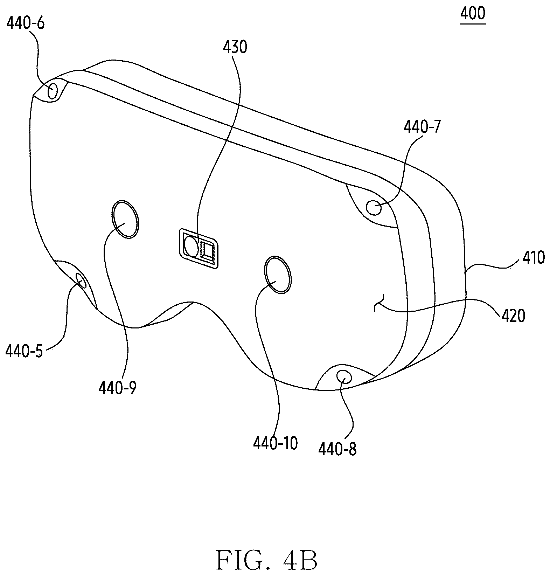

FIGS. 4A to 4B illustrate an example of an exterior of a wearable device 400 according to an embodiment. The wearable device 400 of FIGS. 4A to 4B may include the wearable device 101 of FIGS. 1 and 2. According to an embodiment, an example of an exterior of a first surface 410 of a housing of the wearable device 400 may be illustrated in FIG. 4A, and an example of an exterior of a second surface 420 opposite to the first surface 410 may be illustrated in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing interference by light (e.g., ambient light) different from the light emitted from the first display 350-1 and the second display 350-2.

According to an embodiment, the wearable device 400 may include cameras 440-1 and 440-2 for photographing and/or tracking two eyes of the user adjacent to each of the first display 350-1 and the second display 350-2. The cameras 440-1 and 440-2 may be referred to as the ET camera. According to an embodiment, the wearable device 400 may include cameras 440-3 and 440-4 for photographing and/or recognizing the user's face. The cameras 440-3 and 440-4 may be referred to as a FT camera.

Referring to FIG. 4B, a camera (e.g., cameras 440-5, 440-6, 440-7, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, using cameras 440-9 and 440-10, the wearable device 400 may obtain an image and/or video to be transmitted to each of the user's two eyes. The camera 440-9 may be disposed on the second surface 420 of the wearable device 400 to obtain an image to be displayed through the second display 350-2 corresponding to the right eye among the two eyes. The camera 440-10 may be disposed on the second surface 420 of the wearable device 400 to obtain an image to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. Using the depth sensor 430, the wearable device 400 may obtain spatial information (e.g., a depth map) about at least a portion of the FoV of the user wearing the wearable device 400.

Although not illustrated, a microphone for obtaining sound outputted from the external object may be disposed on the second surface 420 of the wearable device 400. The number of microphones may be one or more according to embodiments.

As described above, according to an embodiment, the wearable device 400 may display an image obtained through the cameras 440-5, 440-6, 440-7, 440-8, 440-9, and 440-10 through the display 350. The wearable device 400 may display a first object (e.g., the first object 110 of FIG. 1) in the image. The wearable device 400 may identify an external electronic device corresponding to the first object. The wearable device 400 may request information for displaying multimedia content provided through the external electronic device through a communication circuit (e.g., the communication circuit 240 of FIG. 2), based on identifying the external electronic device. For example, the wearable device 400 may receive the information transmitted from the external electronic device based at least in part on the request. In response to reception of the information, the wearable device 400 may display a second object (e.g., the second object 115 of FIG. 2) in association with the first object for notifying that the external electronic device is selectable. The wearable device 400 may receive an input for the first object while displaying the first object and the second object. For example, the input for the first object may be identified based on the cameras 440-1 and 440-2. For example, the wearable device 400 may identify the input for the first object, based on tracking a gaze of the user of the wearable device 400, using the cameras 440-1 and 440-2. For example, the wearable device 400 may identify a gesture of the user of the wearable device 400, based on the cameras 440-5, 440-6, 440-7, 440-8, 440-9, and 440-10. The wearable device 400 may identify the input for the first object, based on the user's gesture. The wearable device 400 may display multimedia content based on information transmitted from the external electronic device, based on the input. When displaying the multimedia content, the wearable device 400 may provide multimedia content at a time corresponding to the input. The wearable device 400 may enhance the user experience of the wearable device 400 by providing multimedia content being played at the time corresponding to the input.

FIG. 5 illustrates an example of a screen displayed through a display of a wearable device according to an embodiment. A wearable device 101 of FIG. 5 may include a wearable device 101 of FIGS. 1 and/or 2. The wearable device 101 of FIG. 5 may include a wearable device 300 of FIGS. 3A to 3B and/or a wearable device 400 of FIGS. 4A to 4B. The operations of FIG. 5 may be performed by a processor 210 of FIG. 2.

Referring to FIG. 5, in a first example 500, the wearable device 101 according to an embodiment may display an image obtained through a camera (e.g., the camera 250 of FIG. 2) through a display (e.g., the display 230 of FIG. 2). The wearable device 101 may identify a first object 110 within the image. For example, the wearable device 101 may identify an external electronic device corresponding to the first object 110 based on the identification of the first object 110. The wearable device 101 may display a second object (e.g., the second object 115 of FIG. 2) in conjunction with the first object 110 based on the identification of the external electronic device. For example, the wearable device 101 may display the second object to notify that the first object 110 is selectable in conjunction with the first object 110. The wearable device 101 may identify an input with respect to the first object 110 while displaying the first object 110 and/or the second object 115.

The wearable device 101 according to an embodiment may identify an input with respect to the first object 110 and/or the second object 115. In response to the input with respect to the first object 110 and/or the second object 115, the wearable device 101 may switch to a screen 520 for displaying multimedia content provided through an external electronic device corresponding to the first object 110. The screen 520 may express substantially the same timing as the multimedia content provided through the external electronic device.

The wearable device 101 according to an embodiment may identify the input with respect to the first object 110 and/or the second object 115. For example, the input may be identified based on a user's gesture of the wearable device 101. For example, the input may be received based on a controller of the wearable device 101. For example, the wearable device 101 may identify an input dragging the first object 110 and/or the second object 115. For example, the dragging input may, using the controller, maintain an input of pressing the first object 110 and/or the second object 115, and include an input of moving the first object 110 and/or the second object 115. The input with respect to the first object 110 and/or the second object 115 is not limited to the above-described example. The wearable device 101 may display the screen 520 through the display in response to the input. The wearable device 101 may display the screen 520 associated with multimedia content provided through the external electronic device corresponding to the first object 110.

The wearable device 101 according to an embodiment may display a screen associated with multimedia content provided by the external electronic device corresponding to the first object 110 on at least a portion of the display based on identifying the input with respect to the first object 110. For example, the wearable device 101 may display a third object 510 associated with the multimedia content on at least a portion of the display. For example, the third object 510 may be a visual object and/or a virtual object to display the multimedia content.

The wearable device 101 according to an embodiment may identify an input with respect to the third object 510 associated with multimedia content. The wearable device 101 may identify the input with respect to the third object 510 based on a signal received from a controller. For example, the controller may transmit a signal to indicate the virtual object and/or the visual object, such as a pointer, within the display. The wearable device 101 according to an embodiment may identify the input with respect to the third object 510 based on tracking the user's gaze. The wearable device 101 may display the multimedia content based on the entire area of the display based on the identification of the input.

Referring to a second example 505, the wearable device 101 according to an embodiment may display multimedia content through the screen 520 of the display. For example, the wearable device 101 may change to the second example 505 so that multimedia content provided in the first example 500 may be continuously watched. The wearable device 101 according to an embodiment may display a fourth object 530 to switch to the first example 500, within the screen 520. For example, the wearable device 101 may display the fourth object 530 by superimposing the screen 520 associated with multimedia content. The wearable device 101 may cease displaying the fourth object 530 based on exceeding a designated duration while displaying the screen 520. For example, the wearable device 101 may at least temporarily cease displaying the fourth object 530 to provide multimedia content through the entire area of the display.

As described above, the wearable device 101 according to an embodiment may identify an external electronic device while operating in a VST mode. The wearable device 101 may display the second object to notify that the first object 110 for the external electronic device is selectable. The wearable device 101 may display multimedia content provided by the external electronic device corresponding to the first object 110 in at least a partial area of the display based on identifying the input with respect to the first object 110. For example, the wearable device 101 may display the multimedia content through a visual object such as the third object 510. The wearable device 101 may display the screen 520 associated with multimedia content based on input with respect to the third object 510. For example, the screen 520 associated with the multimedia content may be the entire area of the display. For example, the wearable device 101 may display the fourth object 530 to reduce a size of the screen 520 while displaying the screen 520. The wearable device 101 may change the size of the screen 520 to a size of the third object 510 based on input with respect to the fourth object 530. The size of the screen 520, the size of the third object 510, and/or a position of the third object 510 are not limited. The wearable device 101 may perform switching of the third object 510 and the screen 520. The wearable device 101 may enhance user experience of the wearable device 101 by performing the switching based on the user's input.

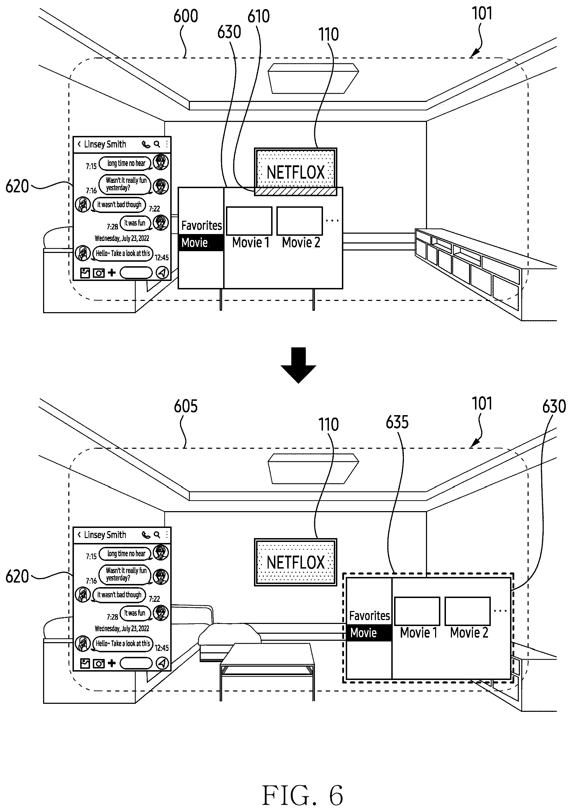

FIG. 6 illustrates an example of a screen displayed through a display of a wearable device according to an embodiment. A wearable device 101 of FIG. 6 may include a wearable device 101 of FIGS. 1, 2, and/or 5. The wearable device 101 of FIG. 6 may include a wearable device 300 of FIGS. 3A to 3B and/or a wearable device 400 of FIGS. 4A to 4B. The operations of FIG. 6 may be performed by a processor 210 of FIG. 2.

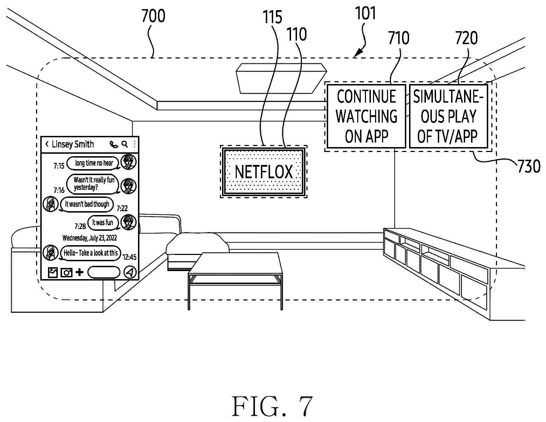

Referring to FIG. 7, the wearable device 101 according to an embodiment may obtain an image through a camera in a first example 600. The wearable device 101 may identify a first object 110 within the image. For example, the wearable device 101 may identify an external electronic device corresponding to the first object 110. The wearable device 101 may identify a second object 620 and/or a third object 630 different from the first object while identifying the first object 110. For example, the second object 620 and/or the third object 630 may be an object displayed based on the execution of a software application. For example, the wearable device 101 may identify the second object 620 and/or the third object 630 while the external electronic device corresponding to the first object 110 provides multimedia content. The wearable device 101 may move the superimposed object based on identifying the second object 620 and/or the third object 630 superimposed with the first object 110 corresponding to the external electronic device to which multimedia content is provided. For example, in the first example 600, the wearable device 101 may move the third object 630 superimposed with the first object 110. For example, the wearable device 101 may move the third object 630 based on identifying a superimposed area 610 of the first object 110 and the third object 630. A second example 605 may be an example of moving the third object 630 superimposed with the first object 110. The wearable device 101 may move the third object 630 to an area 635 where the superimposed area 610 is not identified.

The wearable device 101 according to an embodiment may identify a plurality of objects 620 and 630. For example, the wearable device 101 may highlight and display the third object 630 including the area 610 superimposed with the first object 110 among the plurality of objects 620 and 630. For example, the operation of highlighting and displaying may include an operation of blinking the third object 630. For example, the operation of highlighting and displaying may include an operation of displaying the third object 630 in a different color. However, it is not limited thereto. The wearable device 101 according to an embodiment may receive an input with respect to the third object 630 while highlighting and displaying the third object 630. For example, the input may include an input of dragging the third object 630. The wearable device 101 may move the third object 630 based on the input.

As described above, the wearable device 101 according to an embodiment may identify the first object 110 corresponding to the external electronic device providing multimedia content. The wearable device 101 may identify the third object 630 at least partially superimposed with the first object 110. The wearable device 101 may move the third object 630 to the area 635 that does not superimpose with the first object 110. The wearable device 101 may move the third object 630 based on input with respect to the third object 630. The wearable device 101 may provide a user with multimedia content provided from the external electronic device corresponding to the first object 110 by moving the third object 630 superimposed with the first object 110. The wearable device 101 may help the user watch multimedia content provided through the external electronic device corresponding to the first object 110 by moving the third object 630 superimposed with the first object 110.

FIG. 7 illustrates an example of a screen displayed through a display of a wearable device according to an embodiment. A wearable device 101 of FIG. 7 may include a wearable device 101 of FIGS. 1, 2, 5, and/or 6. The wearable device 101 of FIG. 7 may include a wearable device 300 of FIGS. 3A to 3B and/or a wearable device 400 of FIGS. 4A to 4B. The operations of FIG. 7 may be performed by a processor 210 of FIG. 2.

Referring to FIG. 7, the wearable device 101 according to an embodiment may obtain an image through a camera (e.g., the camera 250 of FIG. 2). Referring to a first example 700, the wearable device 101 may display objects generated by a processor (e.g., the processor 210 of FIG. 2) together with the image.

The wearable device 101 may identify a first object 110 within the image. The wearable device 101 may identify an external electronic device corresponding to the first object 110 based on the first object 110. Based on the identification, the wearable device 101 may request information to display multimedia content provided through the external electronic device to the external electronic device. The wearable device 101 may receive the information transmitted from the external electronic device based at least in part on the request. In response to receiving the information, the wearable device 101 may display a second object 115 to notify that the external electronic device is selectable. For example, the wearable device 101 may display the second object 115 in conjunction with the first object 110. For example, the wearable device 101 may display the second object 115 along an edge of the first object 110.

The wearable device 101 according to an embodiment may identify an input with respect to the first object 110 and/or the second object 115. The wearable device 101 may display a third object 710 and a fourth object 720 within at least a partial area 730 of a display based on the input with respect to the first object 110 and/or the second object 115. For example, the third object 710 may be a button to at least temporarily stop multimedia content provided by the external electronic device corresponding to the first object 110 and initiate performing an operation to display the multimedia content through the display of the wearable device 101. For example, the third object 710 may include text such as 'Continue watching on App'. For example, the fourth object 720 may be a button to simultaneously provide multimedia content through the external electronic device corresponding to the first object 110 and the display of the wearable device 101. For example, the fourth object 720 may include text such as 'simultaneous play of TV/App'. In the example 700 of FIG. 7, the third object 710 and the fourth object 720 are illustrated, but embodiments are not limited thereto. For example, the wearable device 101 may display an image including visual information within the third object 710 and/or the fourth object 720. For example, the wearable device 101 may perform a designated function of objects displayed on the screen.

As described above, the wearable device 101 according to an embodiment may display the first object 110 and/or the second object 115 corresponding to the external electronic device. The wearable device 101 may identify the input with respect to the first object 110 and/or the second object 115. The wearable device 101 may display an object (or the objects 710 and 720) to perform a function (or operation) based on the input with respect to the first object 110 and/or the second object 115. The wearable device 101 may perform an operation corresponding to a function represented by the object based on an input with respect to the object. By performing a function (or operation) corresponding to the object, the wearable device 101 may provide multimedia content through the wearable device 101, or may provide multimedia content through the wearable device 101 and the external electronic device. The wearable device 101 may enhance user experience of the wearable device 101 by providing the multimedia content.

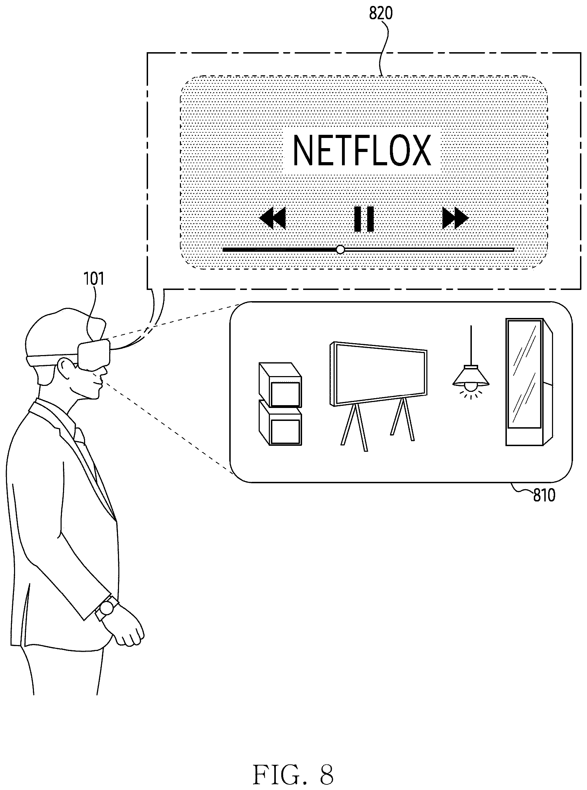

FIG. 8 illustrates an example of a state of use of a wearable device according to an embodiment. A wearable device 101 of FIG. 8 may include a wearable device 101 of FIGS. 1, 2, 5, 6, and/or 7. The wearable device 101 of FIG. 8 may include a wearable device 300 of FIGS. 3A to 3B and/or a wearable device 400 of FIGS. 4A to 4B. The operations of FIG. 8 may be performed by a processor 210 of FIG. 2.

Referring to FIG. 8, the wearable device 101 according to an embodiment may identify a position of the wearable device 101. For example, the wearable device 101 may identify the position of the wearable device 101 based on a GPS sensor. For example, the wearable device 101 may identify the position of the wearable device 101 based on scene recognition. For example, the wearable device 101 may perform the scene recognition based on identifying a designated event. For example, the designated event may include the initiation of an operation of providing multimedia content 820. For example, the wearable device 101 may store a scene 810 identified when providing the multimedia content 820 in a memory (e.g., the memory 220 of FIG. 2). For example, the wearable device 101 may provide the multimedia content 820 at a position where the scene 810 is recognized based on identifying the scene 810, which is identified when providing the multimedia content 820, more than a designated number of times. For example, the wearable device 101 may identify whether the scene 810 stored when providing the multimedia content 820 and an image obtained through the camera are the same. For example, the wearable device 101 may provide the multimedia content 820 based on the scene 810 and the image being the same.

The wearable device 101 according to an embodiment may identify the position of the wearable device 101 based on simultaneous localization and mapping (SLAM). For example, the wearable device 101 may identify the position of the wearable device 101 when providing the multimedia content 820 based on the SLAM. The wearable device 101 may identify a position where the multimedia content 820 is repeatedly provided based on the SLAM and/or the scene recognition. The wearable device 101 may store the position where the multimedia content 820 is repeatedly provided in a memory. Although not illustrated in FIG. 8, the wearable device 101 may display an object to guide the provision of the multimedia content 820 based on identifying the position of the wearable device 101 corresponding to the position stored in the memory. For example, the wearable device 101 may provide the multimedia content 820 based on an input with respect to the object to guide the provision of the multimedia content 820.

The wearable device 101 according to an embodiment may identify a first position of the wearable device 101 based on the image obtained through the camera. The wearable device 101 may display multimedia content based on identifying the first position corresponding to a second position stored in the memory. For example, the second position may be a position where multimedia content is repeatedly provided.

As described above, the wearable device 101 according to an embodiment may identify the position of the wearable device 101. The wearable device 101 may identify the position of the wearable device 101 based on the repeatedly identified scene 810 and/or the SLAM. The wearable device 101 may identify the position of the wearable device 101 when providing the multimedia content 820. The wearable device 101 may store the position of the wearable device 101 when providing the multimedia content 820 in the memory. The wearable device 101 may provide the multimedia content 820 based on identifying the position of the wearable device 101 corresponding to the position stored in the memory. The wearable device 101 may display the object to guide the provision of the multimedia content 820 based on identifying the position of the wearable device 101 corresponding to the position stored in the memory. The wearable device 101 may help a user easily receive the multimedia content 820 by providing the multimedia content 820 based on the position of the wearable device 101 corresponding to the position stored in the memory. The wearable device 101 may enhance user experience of the wearable device 101 by providing the multimedia content 820 based on identifying the position of the wearable device 101 identified at a designated position.

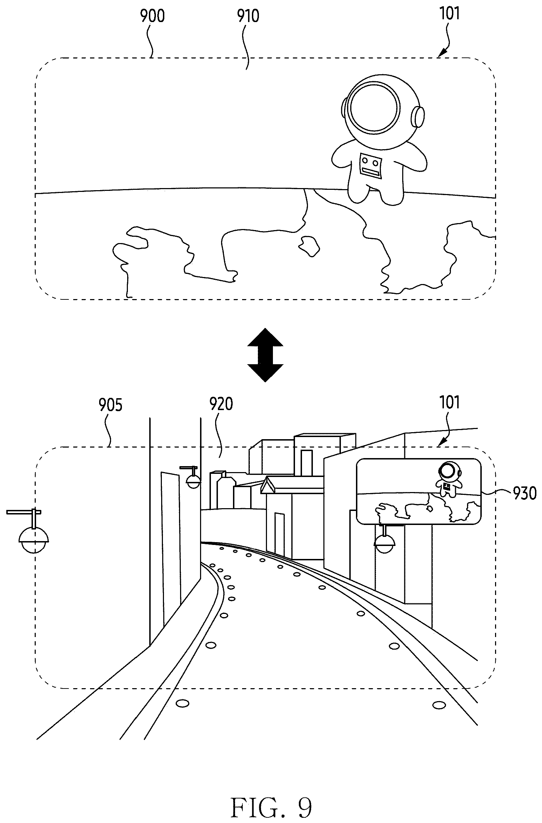

FIG. 9 illustrates an example of a screen displayed through a display of a wearable device according to an embodiment. A wearable device 101 of FIG. 9 may include a wearable device 101 of FIGS. 1, 2, 5, 6, 7, and/or 8. The wearable device 101 of FIG. 9 may include a wearable device 300 of FIGS. 3A to 3B and/or a wearable device 400 of FIGS. 4A to 4B. The operations of FIG. 9 may be performed by a processor 210 of FIG. 2.

Referring to FIG. 9, in a first example 900, the wearable device 101 according to an embodiment may provide multimedia content 910. For example, the first example 900 may be an example in which a user of the wearable device 101 is provided with the multimedia content 910 while wearing the wearable device 101 and not moving. The wearable device 101 may display the multimedia content 910 through a display (e.g., the display 230 of FIG. 2). The wearable device 101 according to an embodiment may identify that a position of the wearable device 101 is changed while providing the multimedia content 910. For example, the wearable device 101 may identify the movement of the wearable device 101 based on an image obtained through a camera (e.g., the camera 250 of FIG. 2). For example, the wearable device 101 may identify the movement of the wearable device 101 based on the difference in the image obtained through the camera. For example, the wearable device 101 may identify the movement of the wearable device 101 based on a GPS sensor.

The wearable device 101 according to an embodiment may reduce the size of the multimedia content 910 based on the identification of the movement of the wearable device 101. For example, the wearable device 101 may display a screen such as a second example 905. For example, the wearable device 101 may display an object 930 corresponding to the multimedia content 910 by reducing the size of the multimedia content 910 based on the movement of the wearable device 101. The wearable device 101 may display an image 920 obtained through the camera while displaying the object 930, which is reduced from the multimedia content 910. The wearable device 101 may display the object 930 superimposed on the image 920. For example, the wearable device 101 may provide the multimedia content 910 through the object 930.

The wearable device 101 according to an embodiment may adjust a size of the object 930. For example, the wearable device 101 may adjust the size of the object 930 based on an input with respect to the object 930. For example, the input with respect to the object 930 may include an operation of dragging the object 930. For example, the input with respect to the object 930 may include an operation to pinch-to-zoom the object 930. The input with respect to the object 930 may be received by a controller. The input with respect to the object 930 may be received by the user's gesture through the camera of the wearable device 101. The wearable device 101 may enlarge or reduce the size of the object 930 based on the input.

As described above, the wearable device 101 according to an embodiment may display the multimedia content 910. The wearable device 101 may identify the movement of the wearable device 101 while displaying the multimedia content 910. The wearable device 101 may display the image 920 obtained through the camera based on the identification of the movement. While displaying the image 920, the wearable device 101 may superimpose and display the object 930 corresponding to the multimedia content 910 on the image 920. The wearable device 101 may provide the multimedia content 910 through the object 930. The wearable device 101 may help the user of the wearable device 101 receive the multimedia content 910 in a safe state by converting the multimedia content 910 to the object 930 and displaying the image 920 obtained through the camera based on identifying the user's movement.

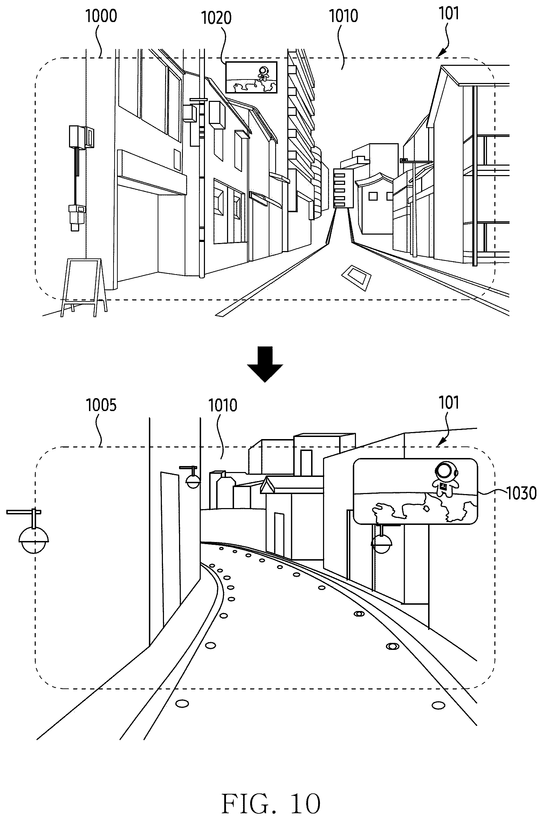

FIG. 10 illustrates an example of a screen displayed through a display of a wearable device according to an embodiment. A wearable device 101 of FIG. 10 may include a wearable device 101 of FIGS. 1, 2, 5, 6, 7, 8, and/or 9. The wearable device 101 of FIG. 10 may include a wearable device 300 of FIGS. 3A to 3B and/or a wearable device 400 of FIGS. 4A to 4B. The operations of FIG. 10 may be performed by a processor 210 of FIG. 2.

Referring to FIG. 10, the wearable device 101 according to an embodiment may provide a screen 1010 through a display (e.g., the display 230 of FIG. 2) within a first place 1000. For example, the screen 1010 may be provided based on an image obtained through a camera (e.g., the camera 220 of FIG. 2) of the wearable device 101 within a VR state. For example, the screen 1010 may be a screen provided by penetrating a display within an AR state. The wearable device 101 may identify multimedia content 1020 provided by a first external electronic device while providing the screen 1010. The wearable device 101 may receive an input with respect to an area including the multimedia content 1020 based on the identification of the multimedia content 1020. For example, the input may be identified based on a controller of the wearable device 101 and/or a gaze of a user of the wearable device 101. For example, the wearable device 101 may identify the input with respect to the area including the multimedia content 1020 by tracking the user's gaze using a gaze tracking camera. The wearable device 101 may search for the multimedia content 1020 using a second external electronic device (e.g., the server) based on the input. For example, the wearable device 101 may display the multimedia content 1020 in at least a partial area of the screen 1010 based on the search for the multimedia content 1020.

The wearable device 101 according to an embodiment may display an object 1030 to provide the multimedia content 1020 within the screen 1010 during a change in a position of the wearable device 101. For example, the wearable device 101 may display the multimedia content 1020 using the object 1030 within a second place 1005 different from the first place 1000. The wearable device 101 may receive an input to adjust a size of the object 1030 while displaying the object 1030. For example, the input to adjust the size of the object 1030 may include an operation of dragging the object 1030. For example, the input to adjust the size of the object 1030 may include an operation to pinch-to-zoom the object 1030. The wearable device 101 may adjust the size of the object 1030 based on the input.

As described above, the wearable device 101 according to an embodiment may identify the multimedia content 1020 provided from the first external electronic device. The wearable device 101 may receive the input with respect to the area including the multimedia content 1020 based on the identification of the multimedia content 1020. The wearable device 101 may search for the multimedia content 1020 using the second external electronic device different from the first external electronic device in response to the input. The wearable device 101 may display the multimedia content 1020 in at least a partial area of the screen 1010 based on the search for the multimedia content 1020. The wearable device 101 may enhance user experience of the wearable device 101 by providing the multimedia content 1020 identified within the screen 1010 based on the user's input.

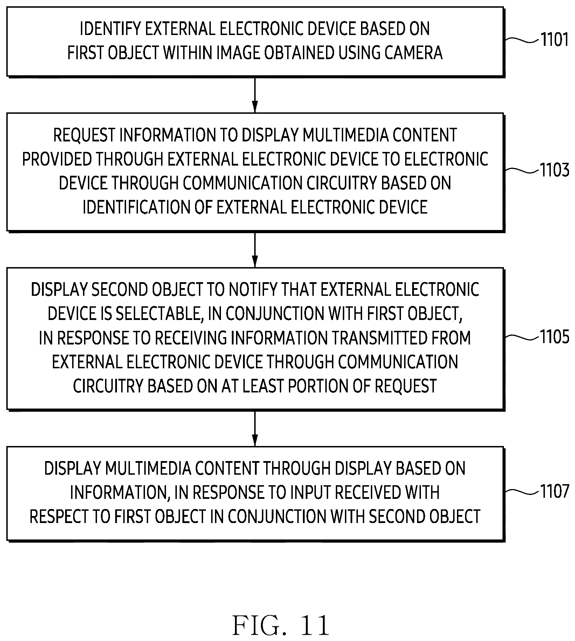

FIG. 11 illustrates an example of a flowchart regarding an operation of a wearable device according to an embodiment. A wearable device of FIG. 11 may include a wearable device 101 of FIGS. 1, 2, 5, 6, 7, 8, 9, and/or 10. The wearable device of FIG. 11 may include a wearable device 300 of FIGS. 3A to 3B and/or a wearable device 400 of FIGS. 4A to 4B. The operations of FIG. 11 may be performed by a processor 210 of FIG. 2.

Referring to FIG. 11, in operation 1101, a wearable device according to an embodiment may identify an external electronic device based on a first object (e.g., the first object 110 of FIG. 1) within an image obtained using a camera (e.g., the camera 250 of FIG. 2). For example, the wearable device 101 may identify an external electronic device corresponding to the first object 110.

In operation 1103, the wearable device according to an embodiment may request information to display multimedia content provided through the external electronic device based on the identification of the external electronic device. For example, through communication circuitry (e.g., the communication circuitry 240 of FIG. 2), the wearable device may request information to display multimedia content provided through the external electronic device to the external electronic device corresponding to the first object.

In operation 1105, the wearable device according to an embodiment may receive information transmitted from the external electronic device based at least in part on the request for information to display multimedia content. For example, the wearable device may receive the information through the communication circuitry. In response to receiving the information, the wearable device may display a second object to notify that the external electronic device is selectable in conjunction with the first object. For example, the wearable device may display the second object along an edge of the first object. For example, the wearable device may superimpose the second object on the first object and display it by blinking.

In operation 1107, the wearable device according to an embodiment may identify an input received with respect to the first object associated with the second object. For example, the input received with respect to the first object may be received based on a controller that has established a communication link with the wearable device. For example, the input received with respect to the first object may be received based on the identification of the user's gaze of the wearable device. The wearable device may display the multimedia content through a display (e.g., the display 230 of FIG. 2) based on information to display multimedia content transmitted from the external electronic device in response to the input.

As described above, the wearable device according to an embodiment may identify the external electronic device based on the first object within the image obtained using the camera. The wearable device may request information to display multimedia content provided through the external electronic device to the external electronic device through the communication circuitry based on the identification of the external electronic device. In response to receiving information transmitted from the external electronic device through the communication circuitry based on at least a portion of the request, the wearable device may display the second object to notify that the external electronic device is selectable in conjunction with the first object. The wearable device may display multimedia content through the display based on the information in response to the input received with respect to the first object associated with the second object. The wearable device may enhance user experience of the wearable device by providing the multimedia content by receiving information associated with multimedia content provided through the external electronic device.

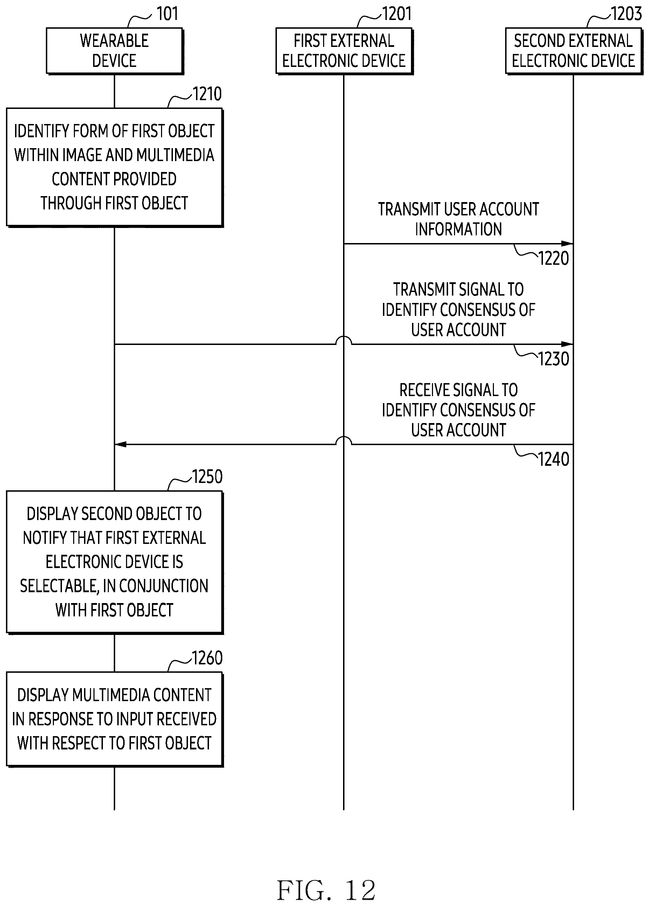

FIG. 12 illustrates an example of a signal flowchart regarding an operation of a wearable device according to an embodiment. A wearable device 101 of FIG. 12 may include a wearable device 101 of FIGS. 1, 2, 5, 6, 7, 8, 9, and/or 10, and/or a wearable device of FIG. 11. The wearable device 101 of FIG. 12 may include a wearable device 300 of FIGS. 3A to 3B and/or a wearable device 400 of FIGS. 4A to 4B. The operations of FIG. 12 may be performed by a processor 210 of FIG. 2. A first external electronic device 1201 of FIG. 12 may include a device to provide multimedia content through a display included in the first external electronic device 1201. A second external electronic device 1203 of FIG. 12 may be referred to as a server.

Referring to FIG. 12, in operation 1210, the wearable device 101 according to an embodiment may identify a shape of a first object (e.g., the first object 110 of FIG. 1) within an image obtained through a camera (e.g., the camera 250 of FIG. 2) and multimedia content provided through the first object. For example, the first object may be referred to as the first external electronic device 1201. For example, the wearable device 101 may encrypt the shape of the first object based on the identification of the shape of the first object. For example, the wearable device 101 may perform the encryption on the shape of the first object to identify consensus of first user account information logged in to the first external electronic device and second user account information logged in to the wearable device 101.

In operation 1220, the first external electronic device 1201 according to an embodiment may transmit the first user account information to the second external electronic device 1203. For example, the first external electronic device 1201 may encrypt the first user account information. The first external electronic device 1201 may transmit the encrypted first user account information to the second external electronic device 1203. For example, the first external electronic device 1201 may transmit information associated with the shape of the first external electronic device to the second external electronic device 1203 together with the first user account information.

In operation 1230, the wearable device 101 according to an embodiment may transmit a signal to identify consensus of the first user account and the second user account to the second external electronic device 1203. For example, the signal may include information associated with the shape of the first object and user information logged in to the wearable device 101. For example, the signal may include a signal to request user account information of the first external electronic device 1201 transmitted to the second external electronic device 1203.

In operation 1240, the wearable device 101 according to an embodiment may receive a signal to identify consensus of the user account. For example, the signal to identify consensus of the account may be transmitted based on the consensus of the first user information logged in to the first external electronic device 1201 and the second user information logged in to the wearable device 101 by the second external electronic device 1203. For example, the second external electronic device 1203 may decrypt information (or signals) transmitted from the wearable device 101 and the first external electronic device 1201. The second external electronic device 1203 may identify consensus of the first user information and the second user information based on decrypting the information. For example, the second external electronic device 1203 may initiate an operation to identify consensus of user information based on consensus of information associated with the shape of the first object transmitted from the wearable device 101 and information associated with the shape of the first external electronic device 1201 transmitted from the first external electronic device 1201. The second external electronic device 1203 may identify consensus of the second user information of the wearable device 101 and the first user information of the first external electronic device based on the initiation. The second external electronic device 1203 may transmit a signal to confirm consensus of the user account to the wearable device 101 based on the consensus.

In operation 1250, the wearable device 101 according to an embodiment may display a second object (e.g., the second object 115 of FIG. 1) to notify that the first external electronic device is selectable based on consensus of the second user information of the wearable device 101 and the first user information of the first external electronic device 1201 in conjunction with the first object. The wearable device 101 may display the second object along an edge of the first object. The wearable device 101 may display the second object by superimposing the first object.

In operation 1260, the wearable device 101 according to an embodiment may receive an input with respect to the first object. The wearable device 101 may display multimedia content provided through the first external electronic device 1201 in response to the input received with respect to the first object.

As described above, the wearable device 101 according to an embodiment may perform an operation to identify consensus of the first user information logged in to the first external electronic device 1201 and the second user information logged in to the wearable device 101. The wearable device 101 may perform a request to the second external electronic device 1203 to identify consensus of the first user information and the second user information. The wearable device 101 may display multimedia content provided through the first external electronic device 1201 based on consensus of the first user information and the second user information. The wearable device 101 may enhance user experience of the wearable device 101 by displaying multimedia content provided through the first external electronic device 1201.

Metaverse is a compound word of the English word "Meta", which means "virtual" and "transcendence," and "Universe", which means the universe, and refers to a three-dimensional virtual world where social, economic, and cultural activities like the real-world take place. Metaverse is a concept that has evolved one step further than virtual reality (VR, a state-of-the-art technology that enables people to experience real-life experience in a virtual world created by a computer) and is characterized by using avatars to not only enjoy games or virtual reality, but also to engage in social and cultural activities like real reality. Metaverse service may provide media content to enhance immersion in the virtual world based on augmented reality (AR), virtual reality environment (VR), mixed environment (MR), and/or extended reality (XR).

For example, media content provided by a metaverse service may include social interaction content including an avatar-based game, a concert, a party, and/or a meeting. For example, the media content may include information for economic activity such as advertising, user created content, and/or sales and/or shopping of a product. Ownership of the user created content may be proved by a blockchain-based non-fungible token (NFT). The metaverse service may support economic activity based on real money and/or cryptocurrency. Virtual content associated with the real world, such as digital twin or life logging, may be provided by the metaverse service.

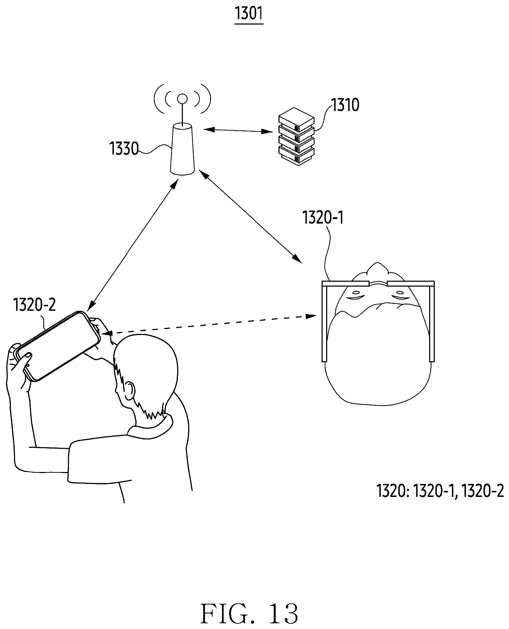

FIG. 13 is an exemplary diagram for a network environment 1301 in which a metaverse service is provided through a server 1310.

Referring to FIG. 13, a network environment 1301 may include a server 1310, a user terminal 1320 (e.g., a first terminal 1320-1 and a second terminal 1320-2), and a network connecting the server 1310 and the user terminal 1320. Within the network environment 1301, the server 1310 may provide a metaverse service to the user terminal 1320. The network may be formed by at least one intermediate node 1330 including an access point (AP) and/or a base station. The user terminal 1320 may output a user interface (UI) associated with the metaverse service to a user of the user terminal 1320 by accessing the server 1320 through the network. Based on the UI, the user terminal 1320 may obtain information to be inputted as the metaverse service from the user or output information (e.g., multimedia content) associated with the metaverse service to the user.

At this time, the server 1310 enables the user terminal 1320 to be active in a virtual space by providing the virtual space. In addition, by installing a software (S/W) agent to access the virtual space provided by the server 1310, the user terminal 1320 expresses information that the server 1310 provides to the user, or transmits information that the user wants to express in the virtual space to the server. The S/W agent may be provided directly through the server 1310, downloaded from a public server, or embedded when purchasing a terminal.

In an embodiment, the metaverse service may be provided to the user terminal 1320 and/or the user using the server 1310. The embodiment is not limited thereto, and the metaverse service may be provided through individual contact between users. For example, within the network environment 1301, the metaverse service may be provided by a direct connection between the first terminal 1320-1 and the second terminal 1320-2 independently of the server 1310. Referring to FIG. 13, within the network environment 1301, the first terminal 1320-1 and the second terminal 1320-2 may be connected to each other through a network formed by the at least one intermediate node 1330. In an embodiment in which the first terminal 1320-1 and the second terminal 1320-2 are directly connected, either of the first terminal 1320-1 and the second terminal 1320-2 may perform the role of the server 1310. For example, a metaverse environment may be configured solely by a device-to-device connection (e.g., peer-to-peer (P2P) connection).

In an embodiment, the user terminal 1320 (or the user terminal 1320 including the first terminal 1320-1 and the second terminal 1320-2) may be made of various form factors, and is characterized by including an output device that provides an image or/and sound to the user and an input device for inputting information to the metaverse service. Examples of various form factors of the user terminal 1320 may include a smartphone (e.g., the second terminal 1320-2), an AR device (e.g., the first terminal 1320-1), a VR device, an MR device, a Video See Through (VST) device, an Optical See Through (OST) device, a smart lens, a smart mirror, a TV or projector capable of inputting/outputting.

The network (e.g., the network formed by the at least one intermediate node 1330) includes various broadband networks including 3G, 4G, and 5G, and short-range network (e.g., wired network or wireless network directly connecting the first terminal 1320-1 and the second terminal 1320-2) including Wi-Fi and BT.

A method to display multimedia content provided through an external electronic device may be required. As described above, a wearable device 101 according to an embodiment may comprise communication circuitry 240, a display 230, a camera 250, a memory 220 storing instructions, and a processor 210. The instructions, when executed by the processor, may cause the wearable device to identify an external electronic device based on a first object 110 within an image obtained using the camera 250. The instructions, when executed by the processor, may cause the wearable device to request information to display multimedia content provided through the external electronic device, to the external electronic device through the communication circuitry 240 based on the identification. The instructions, when executed by the processor, may cause the wearable device to display, in conjunction with the first object 110, a second object 115 to notify that the external electronic device is selectable, in response to receiving the information transmitted from the external electronic device through the communication circuitry 240. The instructions, when executed by the processor, may cause the wearable device to display, through the display 230, the multimedia content obtained from the external electronic device based on the information, based on whether a user input with respect to the first object 110 is detected.

According to an embodiment, the first object 110 in conjunction with the second object 115 may be visually highlighted with respect to at least one third object 120 within the image, that is displayed in an area different from the first object 110.

The second object 115 according to an embodiment may be displayed along an edge of the first object 110, or may be displayed as superimposed on the first object 110 with blinking.

The processor 210 according to an embodiment may display a fourth object 720 receiving an input to provide the multimedia content in conjunction with the external electronic device.

The instructions according to an embodiment, when executed by the processor, may cause the wearable device to identify a first position of the wearable device 101 based on an image obtained through the camera 250. The instructions, when executed by the processor, may cause the wearable device to display the multimedia content through the display 230 based on identifying the first position corresponding to a second position stored in the wearable device 101.

The second position according to an embodiment may be a position set to repeatedly provide the multimedia content.

The instructions according to an embodiment, when executed by the processor, may cause the wearable device to display the second object 115 in conjunction with the first object 110 based on identifying consensus of a first user account of the wearable device 101 and a second user account of the external electronic device.

The instructions according to an embodiment, when executed by the processor, may cause the wearable device to display the multimedia content in a portion of the display 230 based on identifying a movement of a user while displaying the multimedia content.

As described above, according to an embodiment, a method of a wearable device 101 may comprise identifying an external electronic device based on a first object 110 within an image obtained using a camera 250. The method may comprise requesting information to display multimedia content provided through the external electronic device, to the external electronic device through communication circuitry 240 based on the identification. The method may comprise displaying, in conjunction with the first object 110, a second object 115 to notify that the external electronic device is selectable in response to receiving the information transmitted from the external electronic device through the communication circuitry 240. The method may comprise displaying, through the display 230, the multimedia content obtained from the external electronic device based on the information, based on whether a user input with respect to the first object 110 is detected.

According to an embodiment, the first object 110 in conjunction with the second object 115 may be displayed in an area different from the first object 110 and visually highlighted with respect to at least one third object 120 within the image.

The second object 115 according to an embodiment may be displayed along an edge of the first object 110, or may be displayed as superimposed on the first object 110 with blinking.

The method according to an embodiment may comprise displaying a fourth object receiving an input to provide the multimedia content in conjunction with the external electronic device.

The method according to an embodiment may comprise identifying a first position of the wearable device 101 based on an image obtained through the camera 250. The method may comprise displaying the multimedia content through the display 230 based on identifying the first position corresponding to a second position stored in the wearable device 101.

The second position according to an embodiment may be a position set to repeatedly provide the multimedia content.

The method according to an embodiment may comprise displaying the second object 115 in conjunction with the first object 110 based on identifying consensus of a first user account of the wearable device 101 and a second user account of the external electronic device.

The method according to an embodiment may comprise displaying the multimedia content on a portion of the display 230 and displaying an image obtained through the camera 250, based on identifying a movement of a user while displaying the multimedia content.

As described above, a computer-readable storage medium storing one or more programs according to an embodiment, the one or more programs, when executed by a processor 210 of a wearable device 101, may cause the processor 210 of the wearable device 101 to identify an external electronic device based on a first object 110 within an image obtained using a camera 250. The one or more programs, when executed by the processor 210 of the wearable device 101, may cause the processor 210 of the wearable device 101 to request information to display multimedia content provided through the external electronic device, to the external electronic device through communication circuitry 240, based on the identification. The one or more programs, when executed by the processor 210 of the wearable device 101, may cause the processor 210 of the wearable device 101 to display, in conjunction with the first object 110, a second object 115 to notify that the external electronic device is selectable, in response to receiving the information transmitted from the external electronic device through the communication circuitry 240. The one or more programs, when executed by the processor 210 of the wearable device 101, may cause the processor 210 of the wearable device 101 to display, through the display 230, the multimedia content obtained from the external electronic device based on the information, based on whether a user input with respect to the first object 110 is detected.

According to an embodiment, the first object 110 in conjunction with the second object 115 may be displayed in an area different from the first object 110 and visually highlighted with respect to at least one third object 120 within the image,.

The second object 115 according to an embodiment may be displayed along an edge of the first object 110, or may be displayed as superimposed on the first object 110 with blinking.

The one or more programs according to an embodiment, when executed by the processor 210 of the wearable device 101, may cause the processor 210 of the wearable device 101 to display a fourth object receiving an input to provide the multimedia content in conjunction with the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium (e.g., the memory 220) that is readable by a machine (e.g., the wearable device 101). For example, a processor (e.g., the processor 210) of the machine (e.g., the wearable device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
communication circuitry;
a display;
a camera;
memory storing instructions; and
a processor,
wherein the instructions, when executed by the processor, may cause the wearable device to:
identify an external electronic device based on a first object within an image obtained using the camera;
request information to display multimedia content provided through the external electronic device, to the external electronic device through the communication circuitry based on the identification;
display, in conjunction with the first object, a second object to notify that the external electronic device is selectable, in response to receiving the information transmitted from the external electronic device through the communication circuitry; and
display, through the display, the multimedia content obtained from the external electronic device based on the information, based on whether a user input with respect to the first object is detected.

2. The wearable device of claim 1, wherein the first object in conjunction with the second object is visually highlighted with respect to at least one third object within the image, that is displayed in an area different from the first object.

3. The wearable device of claim 2, wherein the second object is displayed along an edge of the first object, or is displayed as superimposed on the first object with blinking.

4. The wearable device of claim 1, wherein the instructions, when executed by the processor, cause the wearable device to:
display a fourth object receiving an input to provide the multimedia content in conjunction with the external electronic device.

5. The wearable device of claim 1, wherein the instructions, when executed by the processor, cause the wearable device to:
identify a first position of the wearable device based on an image obtained through the camera;
display the multimedia content through the display based on identifying the first position corresponding to a second position stored in the wearable device.

6. The wearable device of claim 5, wherein the second position is a position set to repeatedly provide the multimedia content.

7. The wearable device of claim 1, wherein the instructions, when executed by the processor, cause the wearable device to:
display the second object in conjunction with the first object based on identifying consensus of a first user account of the wearable device and a second user account of the external electronic device.

8. The wearable device of claim 1, wherein the instructions, when executed by the processor, cause the wearable device to:
display the multimedia content in a portion of the display based on identifying a movement of a user while displaying the multimedia content.

9. A method of a wearable device, comprising:
identifying an external electronic device based on a first object within an image obtained using a camera;
requesting information to display multimedia content provided through the external electronic device, to the external electronic device through communication circuitry based on the identification;
displaying, in conjunction with the first object, a second object to notify that the external electronic device is selectable in response to receiving the information transmitted from the external electronic device through the communication circuitry; and
displaying, through the display, the multimedia content obtained from the external electronic device based on the information, based on whether a user input with respect to the first object is detected.

10. The method of claim 9, wherein the first object in conjunction with the second object may be displayed in an area different from the first object and visually highlighted with respect to at least one third object within the image.

11. The method of claim 10, wherein the second object is displayed along an edge of the first object, or is displayed as superimposed on the first object with blinking.

12. The method of claim 9, further comprising:
displaying a fourth object receiving an input to provide the multimedia content in conjunction with the external electronic device.

13. The method of claim 9, further comprising:
identifying a first position of the wearable device based on an image obtained through the camera; and
displaying the multimedia content through the display based on identifying the first position corresponding to a second position stored in the wearable device.

14. The method of claim 13, wherein the second position is a position set to repeatedly provide the multimedia content.

15. The method of claim 9, further comprising:
displaying the second object in conjunction with the first object based on identifying consensus of a first user account of the wearable device and a second user account of the external electronic device.
